# EUROPÄISCHE PATENTSCHRIFT

(11) **EP 0 531 643 B1**
(45) Veröffentlichungstag und Bekanntmachung des Hinweises auf die Patenterteilung: **22.11.1995**
(21) Anmeldenummer: 92111081.3
(22) Anmeldetag: 30.06.1992
(51) Int. Cl.: B60T 13/74, B61H 13/04

(54) **Elektromechanischer Bremskrafterzeuger**
Electromechanic brake force generator
Générateur de force de freinage électromécanique

(30) Priorität: 12.09.1991 DE 4130383
(43) Veröffentlichungstag der Anmeldung: 17.03.1993
(73) Patentinhaber: KNORR-BREMSE AG, 80710 München (DE)
(72) Erfinder: Haberzeth, Thomas, W-8000 München 80 (DE)

(56) Entgegenhaltungen:
- EP-A- 0 155 417
- EP-A- 0 166 156
- US-A- 4 532 462

## Beschreibung

Die Erfindung betrifft einen elektromechanischen Bremskrafterzeuger für das Zuspannen von Fahrzeug-, insbesondere Schienenfahrzeug-Reibungsbremsen, mit einer Speicherfeder, die eine Zuspannkraft für die Reibungsbremsen an ein Kraftabgabeglied abzugeben vermag und mit einer Spannvorrichtung für die Speicherfeder, die ein nicht selbsthemmendes Schraubgetriebe mit einem von einem Elektromotor gegebenenfalls über ein Getriebe drehantreibbares erstes Verschraubungsteil aufweist.

Derartige Bremskrafterzeuger sind vielfach, beispielsweise durch die US-PS 4 532 462 bekannt. Ein wesentlicher Mangel dieser bekannten Einrichtungen ist darin zu sehen, daß zum Lösen der Reibungsbremse vermittels des Elektromotors die Speicherfeder gespannt werden muß, wozu ein großer, kräftiger Elektromotor mit entsprechend hohem Stromverbrauch erforderlich ist und der Lösevorgang trotzdem eine beachtliche Zeitspanne benötigt. Um bei Schnellbremsungen tatsächlich ein schnelles Einbremsen ohne leeres Mitdrehen des Elektromotors zu ermöglichen, sind bei vielen der bekannten Bremskrafterzeuger besondere, nur bei Schnellbremsungen zu betätigende Kupplungseinrichtungen erforderlich. Einige der bekannten Bremskrafterzeuger sind auch mit einer Einrichtung zum schnellen Lösen ausgestattet. Soll nach deren Betätigung, ohne zwischenzeitliches Wiederspannen der Speicherfeder, erneut eingebremst werden, so ist dies nur durch manuelles, kraftaufwendiges und langdauerndes Drehen einer Kurbel möglich.

Es ist Aufgabe der Erfindung einen Bremskrafterzeuger der eingangs genannten Art mit einfachen Mitteln derart auszugestalten, daß er bei rascher Einbrems- und Lösemöglichkeit nur einen kleinen, relativ schwachen Elektromotor benötigt; die rasche Einbrems- und Lösemöglichkeit soll zudem den Einbau besonderer Schnellbrems- bzw. Notlöseeinrichtungen erübrigen.

Diese Aufgabe wird nach der Erfindung dadurch gelöst, daß das erste Verschraubungsteil axial verschieblich gelagert, von der Kraft der Speicherfeder belastet und mit einem zweitem und einem dritten Verschraubungsteil verschraubt ist, wobei das zweite Verschraubungsteil drehbar, jedoch über eine schaltbare, erste Bremse festbremsbar und zumindest in Belastungsrichtung des ersten Verschraubungsteiles von der Kraft der Speicherfeder axial unverschieblich gelagert und das dritte Verschraubungsteil drehbar und zumindest in der genannnten Belastungsrichtung axial unverschieblich mit dem Kraftabgabeglied gekoppelt, vermittels einer schaltbaren, zweiten Bremse drehfest haltbar und entgegen der genannten Belastungsrichtung axial an einem festen Anschlag abfangbar ist.

Nach der weiteren Erfindung vorteilhafte Ausgestaltungsmöglichkeiten eines derartigen Bremskrafterzeugers sind den Merkmalen der Unteransprüche entnehmbar.

In den Zeichnungen sind anhand von Schnittbilder Ausführungsbeispiele für nach der Erfindung ausgebildete, elektromechanische Bremskrafterzeuger dargestellt, und zwar zeigt
- Fig.1-4: eine erste Ausführungsform in unterschiedlichen Schaltstellungen und
- Fig.5: ein Teilschnittbild durch eine abgewandelte Ausführungsform.

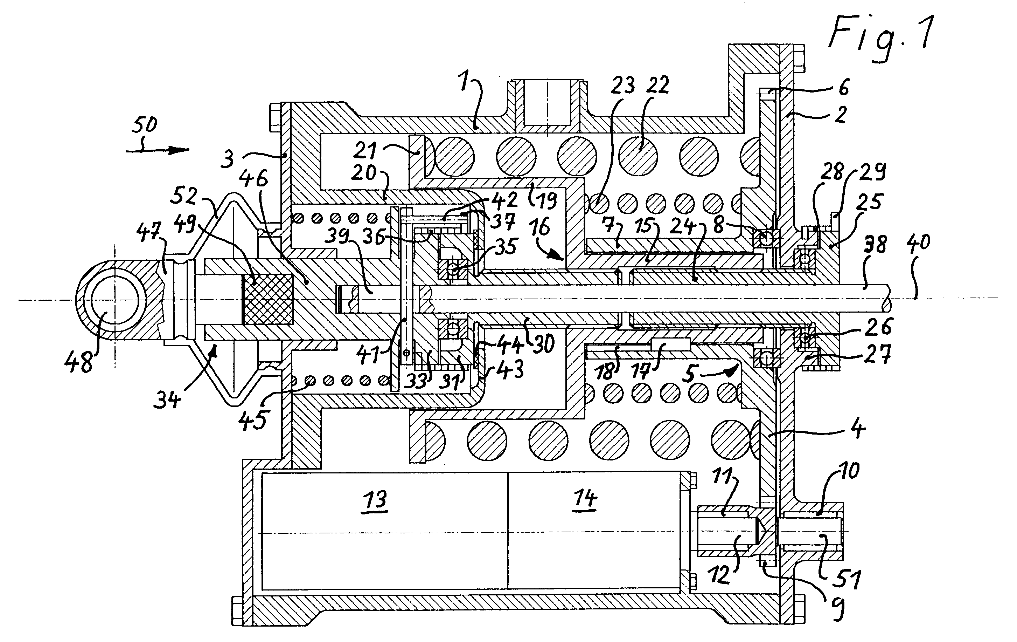

Gemäß Fig.1 weist der Bremskrafterzeuger ein Gehäuse 1 auf, welchem beidseitig je ein lösbar angeordneter Deckel 2 bzw. 3 zugehört; alle diese Teile stellen feste Teile dar. Im Gehäuse 1 befindet sich nahe des Deckels 2 ein zu diesem parallel verlaufender Federtellerabschnitt 4 eines Drehantriebsteiles 5, der Federtellerabschnitt 4 ist an seinem Umfang mit einem Zahnradkranz 6 großen Durchmesser versehen und zentrisch ragt vom Federtellerabschnitt 4 ein Rohrabschnitt 7 in das Innere des Gehäuses 1. Zwischen dem Deckel 2 und das Drehantriebsteil 5 ist ein Axialwälzlager 8 eingeordnet. Mit dem Zahnkranz 6 kämmt ein Zahnradritzel 9, das einerseits vermittels einer Einwegdrehkupplung 10 im Deckel 2 gelagert und andererseits vermittels einer weiteren Einwegdrehkupplung 11 mit einem Antriebswellenstummel 12 eines Elektromotors 13 gekoppelt ist; zwischen dem Elektromotor 13 und dem Antriebswellenstummel 12 kann ein ersterem zugehörendes Untersetzungsgetriebe 14 vorgsehen sein. Erwähnenswert ist, daß das Zahnradritzel 9 mit dem Zahnkranz 6 ein Getriebe 6,9 mit Untersetzungfunktion für das Drehantriebsteil 5 bildet.

In dem Rohrabschnitt 7 ist ein Hülsenabschnitt 15 relativ unverdrehbar, aber axial verschieblich gelagert, welches einem ersten Verschraubungsteil 16 zugehört. Zur unverdrehbaren, axial verschieblichen Lagerung ist in den Hülsenabschnitt 15 ein radial auskragender Drehkeil 17 eingelassen, der in eine Axialnut 18 am Innenumfang des Rohrabschnittes 7 eingreift. Anstelle dieser Drehkeil-Axialnut-Drehkoppelung kann auch eine andersartige, funktionsgleiche Vorrichtung, beispielsweise eine Axialverzahnung vorgesehen sein. Das erste Verschraubungsteil 16 weist einen radial erweiterten, zylindrischen Abschnitt 19 auf, der einen von seiten des Deckels 3 her in das Gehäuseinnere ragenden, festen Ansatz 20 übergreift, und endet mit einem nach radial außen gerichteten, als Federteller 21 dienenden Ringflansch. Zwischen dem Federtellerabschnit 4 und dem Federteller 21 ist eine kräftige Speicherfeder 22 eingespannt; ebenfalls zwischen dem Federtellerabschnitt 4 und einem Übergangsabschnitt zwischen dem Hülsenabschnitt 15 und dem Abschnitt 19 des ersten Verschraubungsteiles 16 ist eine zweite, schwächere Speicherfeder 23 parallel wirkend zur Speicherfeder 22 eingespannt.

Der Hülsenabschnitt 15 ist innenseitig mit einem Innengewinde mit nichtselbsthemmender Steigung versehen. Dieses Innengewinde kann axial durchgehend ausgebildet sein, es können, wie dargestellt, aber auch lediglich die axialen Endabschnitte des Hülsenabschnittes 15 mit Gewinde versehen sein, zwischen welchen sich ein erweiterter Bohrungsabschnitt befindet. Mit diesem Innengewinde ist von seiten des Deckels 2 her ein zweites Verschraubungsteil 24 verschraubt, welches einerseits innerhalb des Hülsenabschnittes 15 endet, andererseits den Deckel 2 drehbar durchragt und außerhalb des Gehäuses 1 mit einem Teller 25 mit zylindrischem Außenumfang endet. Zwischen den Teller 25 und den Deckel 2 ist ein Axialwälzlager 26 eingeordnet. Der Außenumfang des Tellers 25 und ein an ihn anschließender, zylindrischer Abschnitt 27 des Deckels 2 sind von einer mit radialer Vorspannung aufsitzenden Schraubenfeder umgriffen, welche somit eine als Einwegdrehkupplung dienende Schraubenfederreibungskupplung 28 bildet. Die Schraubenfederreibungskupplung 28 ist vermittels eines an einem Ende ihrer Schraubenfeder aufgebogenen Schaltendes 29 schaltbar. Das Schaltende 29 befindet sich zweckmäßig am dem Deckel 2 abgewandten Ende der Schraubenfederreibungskupplung 28, das andere Ende der zugehörigen Schraubenfeder ist zweckmäßig am Abschnitt 27 festgehaltert.

Von seiten des Federtellers 21 her ist in den Hülsenabschnitt 15 ein drittes Verschraubungsteil 30 bis dicht vor das Ende des zweiten Verschraubungsteiles 24 eingeschraubt. Dieses dritte Verschraubungsteil 30 endet innerhalb des Ansatzes 20 mit einem Teller 31 mit zylindrischem Außenumfang, welchem in Richtung zum Deckel 3 ein entsprechender Teller 33 am Ende eines Kraftabgabegliedes 34 gegenübersteht. Zwischen die beiden Teller 31 und 33 ist ein Axialwälzlager 35 eingeordnet. Auf die Außenumfänge der Teller 31 und 33 ist zum Bilden einer weiteren, als Einwegdrehkupplung dienenden Schraubenfederreibungskupplung 36 eine Schraubenfeder mit radialer Vorspannung aufgezogen, deren am Teller 31 befindliches Ende zu einem Schaltende 37 aufgebogen und deren anderes Ende am Teller 33 verankert ist. Zur Fernbetätigung der Schraubenfederreibungskupplung 36 ist eine Schaltstange 38 vorgesehen, welche das zweite und das dritte Verschraubungsteil 24 und 30 koaxial und relativbeweglich durchgreift, einerseits in nicht weiter dargestellter Weise im Freien endet und andererseits im Bereich des Tellers 33 von einem axialen Längsschlitz 39 durchsetzt ist. Der Teller 33 des Kraftabgabegliedes 34 ist vermittels entsprechender Ausnehmungen begrenzt um seine Achsrichtung 40 drehbar von einem Querstift 41 durchsetzt, welcher auch den Längsschlitz 39 durchsetzt und in diesem um die Achsrichtung 40 undrehbar, aber axial verschieblich geführt ist. Das radial äußere Ende des Querstiftes 41 ist vermittels eines weiteren Stiftes 42 mit dem Schaltende 37 der Schraubenfederreibungskupplung 36 gekoppelt.

Der Ansatz 20 endet mit einem radial eigezogenen Ringflansch 43, an welchen sich der Teller 31 des dritten Verschraubungsteiles 30 auf seiner dem Teller 33 abgewandten Seite unter Zwischenlage einer Dämpfungsscheibe anzulegen vermag; zwischen dem Ringflansch 43 als festem Teil und dem dritten Verschraubungsteil 30 wird somit ein Anschlag 44 gebildet. Zwischen den Deckel 3 und das Kraftabgabeglied 34 ist eine im Vergleich zu den Speicherfedern 22 und 23 wesentlich schwächere Feder 45 eingespannt, welche über den Teller 33 das dritte Verschraubungsteil 30 in Schließrichtung des Anschlages 44 belastet.

Das Kraftabgabeglied 34 ist aus zwei teleskopisch zueinander verschieblichen Teilen 46 und 47 zusamnengesetzt, deren eines Teil 46 den Teller 33 trägt und deren anderes Teil 47 mit einem Anlenkauge 48 für das Anlenken eines Bremsgestänges versehen ist. Zwischen die beiden Teile 46 und 47 ist eine deren Druckbelastung messende, nur schematisch dargestellte Druckmessdose 49 eingeordnet. Zum Verbessern der Regelbarkeit der vom Bremskrafterzeuger am Anlenkauge 48 abgebbaren Zuspannkraft kann die Druckmeßdose 49 zugleich als elastisches Glied zwischen den Teilen 46 und 47 ausgebildet werden, es kann jedoch auch in nicht dargestellter Weise anstelle dieser Druckmeßdose 49 oder in Serie zusätzlich zu dieser ein elastisches Glied zwischen den beiden Teilen 46 und 47 vorgesehen werden.

Unter der Belastung des ersten Verschraubungsteiles 16 durch die Kraft der Speicherfedern 22 und 23 erfahren über die nichtselbsthemmende Verschraubung das zweite Verschraubungsteil 24 sowie das dritte Verschraubungsteil 30 und auch das erste Verschraubungsteil 16 Drehmomente. Vermittels der Einwegdrehkupplung 10 sowie der als erste Bremse dienenden Schraubenfederrreibungskupplung 28 sowie der als zweite Bremse dienenden Schraubenfederreibungskupplung 36 werden diese Drehmomente auf den festen Deckel 2 bzw. über das Kraftabgabeglied 34 auf das am Anlenkauge 48 angelenkte, um die Achsrichtung 40 undrehbare Bremsgestänge übertragen und von diesen Teilen aufgenommen. Unter der Voraussetzung, daß die Verschraubung des ersten Verschraubungsteiles 16 mit dem zweiten Verschraubungsteil 24 und dem dritten Verschraubungsteil 30 als übliches, nichtselbsthemmendes Rechtsgewinde ausgebildet ist, sind hierbei die Einwegdrehkupplungen 10 und 11 sowie die Schraubenfederreibungskupplungen 28 und 36 wie folgt auszulegen, wobei die nachfolgend genannten Teile in Blickrichtung gemäß
Pfeil 50 von rechts zu betrachten sind: Das dritte Verschraubungsteil 30 ist an einem Einschrauben in das erste Verschraubungsteil 16 zu hindern, die Schraubenfederreibungskupplung 36 ist daher derart auszulegen, daß sie das dritte Verschraubungsteil 30 gegen eine Rechtsdrehung sperrt; das zweite Verschraubungsteil 24 ist an einem Ausschrauben aus dem ersten Verschraubungsteil 16 relativ nach rechts zu hindern, die Schraubenfederrreibungskupplung 28 muß daher ebenfalls in Rechtsdrehrichtung des zweiten Verschraubungsteiles 24 sperrend ausgebildet werden. Die Einwegdrehkupplung 10 ist derart einzusetzen, daß sie unter Berücksichtigung des Getriebes 6,9 über den Drehkeil 17 das erste Verschraubungsteil 16 an einem Linksdrehen hindert und die Einwegdrehkupplung 11 muß unter Berücksichtigung des Getriebes 6,9 ein rechtsdrehendes Drehmoment auf das erste Verschraubungsteil 16 vom Antriebswellenstummel 12 übertragen können.

In Fig.1 ist der Bremskrafterzeuger in seiner Vollösestellung dargestellt, in welcher vermittels des Elektromotors 13 über das Getriebe 14, die Einwegdrehkupplung 11, das Getriebe 6,9 und den Drehkeil 17 das erste Verschraubungsteil 16 in seine dem Deckel 2 benachbarte Endstellung unter Spannen der Speicherfedern 22 und 23 verschraubt ist. Bei stromlosem Elektromotor 13 hält die Einwegdrehkupplung 10 über das Geriebe 6,9 das erste Verschraubungsteil 16 gegen Drehungen in Verschraubungsrichtung relativ zum zweiten und dritten Verschraubungsteil 24 bzw. 30 nach links fest. Die Schraubenfederreibungskupplungen 28 und 36 halten das zweite Verschraubungsteil 24 bzw. dritte Verschraubungsteil 30 gegen Drehungen in Verschraubungsrichtung relativ zum ersten Verschraubungsteil 16 nach rechts fest. Der Bremskrafterzeuger ist bremsbereit.

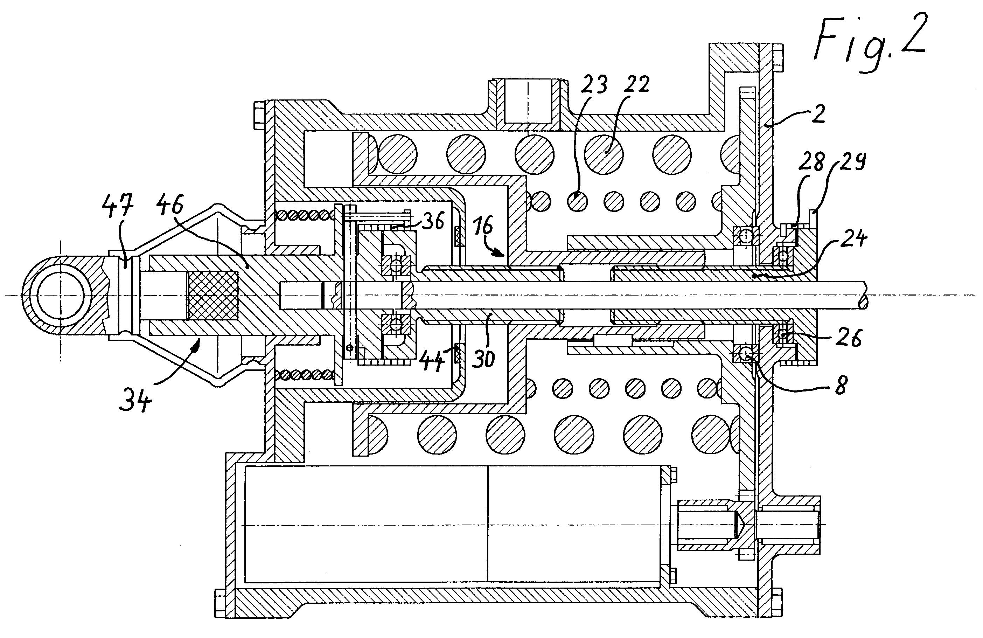

Zum Bremsen wird vermittels des Schaltendes 29 die Schraubenfederreibungskupplung 28 gelöst, woraufhin sich bei weiterhin drehfest gehaltenem ersten und dritten Verschraubungsteil 16 bzw. 30 das erste Verschraubungsteil 16 unter der Kraft der Speicherfedern 22 und 23 nach links bewegt, wobei das zweite Verschraubungsteil 24 sich in Verschraubungsrichtung relativ zum ersten Verschraubungsteil 16 nach rechts dreht. Das erste Verschraubungsteil 16 nimmt datiei das dritte Verschraubungsteil 3 unter Abheben des Anschlages 44 mit, über das Axialwälzlager 35 wird auch das Kraftabgabeglied 34 mitgenommen und spannt die über das Anlenkauge 48 angekoppelte Reibungsbremse mit der Kraft der Speicherfedern 22 und 23 zu. Die Einzelteile des Bremskrafterzeugers gelangen dabei in die in Fig.2 dargestellten Lagen.

Zum Erreichen einer maximalen Bremsenzuspannung ist die Schraubenfederreibungskupplung 28 solange geöffnet zu halten, bis sich das erste Verschraubungsteil 16 allein über das dritte Verschraubungsteil 30 und das Kraftabgabeglied 34 allein gegen die Reibungsbremse abstützt und somit die volle Kraft der Speicherfedern 22 und 23 auf die Reibungsbremse überträgt; beim nachfolgenden Freigeben des Schaltendes 29 und somit Wiederschließen der Schraubenfederreibungskupplung 28 ist das zweite Verschraubungsteil 24 derart weit nach rechts relativ zum ersten Verschraubungsteil 16 verschraubt, daß es keinerlei Axialkraft überträgt. Es ist jedoch auch ein abgestuftes Einbremsen möglich: hierzu ist während des Einbremsvorganges die Schraubenfederreibungskupplung 28 zu schließen und damit das zweite Verschraubungsteil 24 an einem weiteren Ausschrauben relativ zum ersten Verschraubungsteil 16 nach rechts zu hindern, bevor die Speichefeder 22 und 23 ihre ganze Kraft über das dritte Verschraubungsteil 30 auf die Reibungsbremse übertragen; durch Festhalten des zweiten Verschraubungsteiles 24 wird das erste Verschraubungsteil 16 in seiner augenblicklich erreichten, axialen Lage blockiert, in welcher es über das dritte Verschraubungsteil 30 sowie das Kraftabgabeglied 34 nur einen bestimmten Teil der Kraft der Speicherfedern 22 und 23 als Zuspannkraft auf die Reibungsbremse überträgt, während der restliche Kraftanteil über die Verschraubung zum zweiten Verschraubungsteil 24 und das Axialwälzlager 8 gegen den Deckel 2 abgestützt wird. Bei diesem abgestuften Einbremsen wird ausgenutzt, daß infolge der unvermeidlichen Elastizität im Bremsgestänge nach dem Anlegen der Reibungsbremse die Bremsenzuspannkraft bei einer geringfügigen Weiterbewegung des ersten Verschraubungsteiles 16 nicht sprunghaft auf die maximale Zuspannkraft hochspringt, sondern daß hierzu ein Weiterbewegen des ersten Verschraubungsteiles 16 um einen bestimmten Weg nach links erforderlich ist, welcher jedoch durch Sperren des zweiten Verschraubungsteiles 24 vorzeitig begrenzbar ist. Ein Dosieren der angegebenen Zuspannkraft ist daher besonders gut möglich, wenn in der Kraftübertragung vom ersten Verschraubungsteil 16 zu den Reibungsbremse eine in ihrer Größe vorbestimmte Elastizität vorgesehen wird: Diese Elastizität wird zweckmäßig durch die vorstehend bereits erwähnte Einordnung eines axial elastischen Bauteiles zwischen die Teile 46 und 47 des Kraftabgabegliedes 34 realisiert.

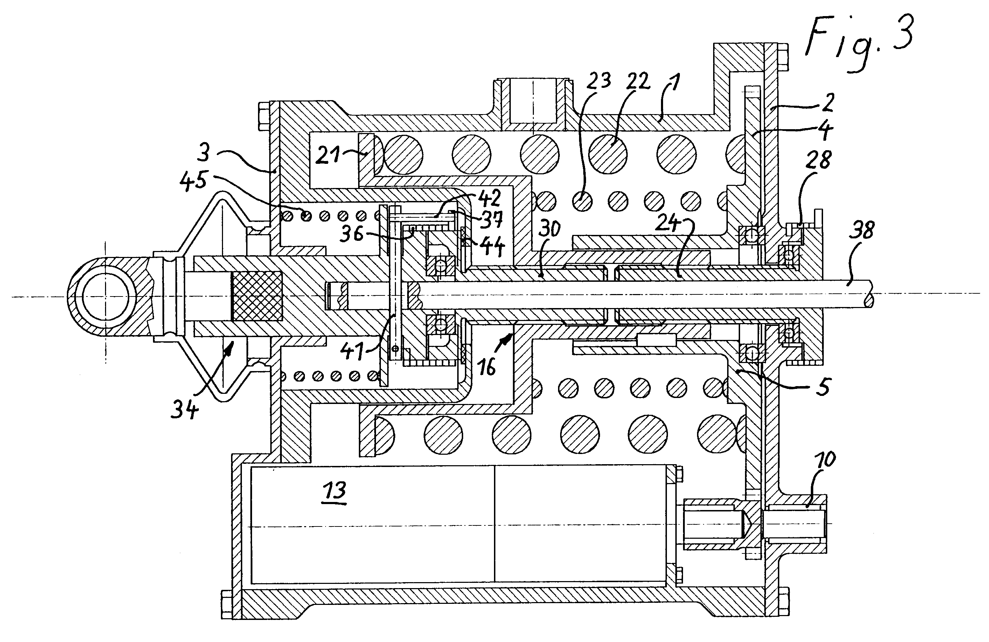

Zum nachfolgenden Lösen der Reibungsbremse ist bei geschlossener Schraubenfederreibungskupplung 28 die Schraubenfederreibungskupplung 36 zu öffnen, wodurch das dritte Verschraubungsteil 30 in Einschraubrichtung nach rechts in das erste Verschraubungsteil 16 drehfrei wird. Bei vermittels des zweiten Veschraubungsteiles 24 in seiner axialen Lage festgehaltenem ersten Verschraubungsteil 16 rotiert sodann das dritte Verschraubungsteil 30 und schraubt sich nach rechts in das erste Verschraubungsteil 16 hinein, wobei das Kraftabgabeglied 34 der Rechtsbewegung folgt und die Reibungsbremse löst. Nach Abbauen der Bremsenzuspannkraft erfolgt die restliche Rechtsverschiebung des Kraftabgabegliedes 34 und des dritten Verschraubungsteiles 30 bis zum Wiederschließen des Anschlages 44 durch die Kraft der Feder 45. In Fig.3 sind die Einzelteile des Bremskrafterzeugers in der so erreichter Lösestellung dargestellt. Der Lösevorgang ist durch vorzeitiges Wiederschließen der Schraubenfederreibungskupplung 36 beliebigt unterbrechbar. Das Schalten der Schraubenfederreibungskupplung 36 erfolgt durch entsprechendes Drehen der Schaltstange 38 um einen bestimmten, relativ kleinen Drehwinkel, wobei durch den Querstift 41 und den Stift 42 das Schaltende 37 der Schraubenfederreibungskupplung 36 entsprechend betätigt wird.

Zum erneuten Einbremsen während des Lösevorganges oder nach Abschluß desselben aus einer Schaltstellung gemäß Fig.3 ist bei zum Unterbrechen des Lösevorganges zu schließender oder geschlossener Schraubenfederreibungskupplung 36 die Schraubenfederreibungskupplung 28 erneut für eine zum Erreichen des gewünschten Einbremszustandes aureichende Zeitspanne zu öffnen; das zweite Verschraubungsteil 24 wird dadurch wieder in Verschraubungsrichtung nach rechts relativ zum ersten Verschraubungsteil 16 drehfrei, das weiterhin undrehbar gehaltene, erste Verschraubungsteil 16 verschiebt sich daher unter der Kraft der Speicherfeder 22 und 23 um einen weiteren Einbremshub nach links, wobei - bei geschlossener Schraubenfederreibungskupplung 36 - über das Kraftabgabeglied 34 die Reibungsbremse betätigt wird und sich das zweite Verschraubungsteil 24 unter Drehen aus dem ersten Verschraubungsteil 16 relativ nach rechts ausschraubt. Bei Erreichen des gewünschten Bremszustandes ist die Schraubenfederreibungskupplung 28 wieder zu schließen. Anschließend kann durch Öffnen der Schraubenfederreibungskupplung 36 die Reibungsbremse wieder gelöst werden, wobei sich das dritte Verschraubungsteil 30 wieder bis zum Schließen des Anschlages 44 in das erste Verschraubungsteil 16 relativ zu diesem nach rechts hineinschraubt. Je nach Auslegung des Bremskrafterzeugers können noch weitere, nachfolgende Einbrems- und Lösezyklen möglich sein, das erste Verschraubungsteil 16 erfährt dabei jeweils eine dem Bremshub entsprechende Verschiebung nach links, wobei die Speicherfedern 22 und 23 zunehmend entspannt werden, während das zweite Verschraubungsteil 24 in seiner axialen Lage verharrt und das dritte Verschraubungsteil 30 jeweils lediglich einen Bremshub nach links und sodann einen gleichgroßen Lösehub nach rechts erfährt. Beim letzten, so möglichen Einbremshub darf somit die Vorspannkraft der Speicherfedern 22,23 nicht auf einen zu niedrigen Wert abgesunken sein, das erste Verschraubungsteil 16 darf seitens des Deckels 3 noch an keinem festen, mit dem Gehäuse 1 verbundenen oder diesem zugehörigen Teil anschlagen und die Verschraubung zwischen dem ersten Verschraubungsteil 16 und dem zweiten Verschraubungsteils 24 darf nicht außer Eingriff gelangen. Im Vollösezustand nach Fig.1 muß somit die axiale Verschraubungshublänge des ersten Verschraubungsteils 16 in dessen Belastungsrichtung durch die Speicherfedern 22 und 23 relativ zum zweiten Verschraubungsteil 24 zumindest etwa der Anzahl der möglichen Brems- und Lösezylklen vorstehend beschriebener Art, multipliziert mit dem axialen Bremshub des Kraftabgabegliedes 34, entsprechen. Im allgemeinen ist es ausreichend, wenn zwei oder höchstens drei der vorstehend beschriebenen Brems- und Lösezylklen nacheinander möglich sind, ohne daß zwischenzeitlich ein Wiederspannen der Speicherfedern 22,23 vermittels des Elektromotors 13 erfolgt, wie es nachstehend beschrieben wird.

Während aller vorstehend beschriebenen Vorgänge ist das erste Verschraubungsteil 16 über den Drehkeil 17, das Getriebe 6,9 und die Einwegdrehkupplung 10 drehfest gehalten.

Ausgehend vom Bremszustand gemäß Fig.2 kann zum Wiederspannen der Speicherfedern 22 und 23 ab unmittelbar nach Beginn des Lösevorganges, bei Erreichen der Lösestellung gemäß Fig.3 oder auch nachfolgend der Elektromotor 18 erregt werden, wobei er über das Getriebe 14, dem Antriebswellenstummel 12, die sich schließende Einwegdrehkupplung bei sich öffnender Einwegdrehkupplung 10, das Getriebe 6,9 und den Drehkeil 17 das erste Verschraubungsteil 16 derart in Drehung versetzt, daß es sich auf dem zweiten und dem dritten Verschraubungsteil 24 bzw. 30 relativ zu diesen nach rechts verschraubt: Die Speicherfedern 22 und 23 werden dabei zwischen den gleichartig rotierenden Federtellerabschnitt 4 und Federteller 21 komprimiert, sie rotieren dabei mit diesen Federtellern 4,21. Dieser Dreh-, Verschraubungs- und Spannvorgang kann anhalten, bis das erste Verschraubungsteil 16 seine rechte Endlage unmittelbar vor dem Deckel 2, also seine in Fig.1 dargestellte Lage, wieder erreicht hat. Der Elektromotor 18 ist dann abzuschalten, vermittels der Einwegdrehkupplung 10 wird das erste Verschraubungsteil 16 gegen ein Zurückschrauben gesichert und fest gehalten.

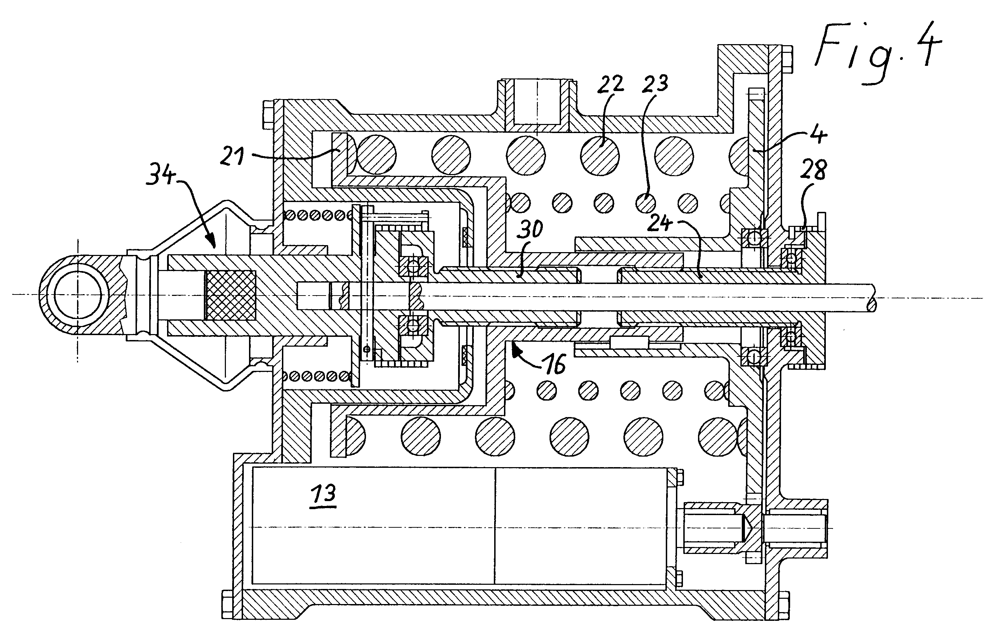

Der vorstehend beschriebene Spannvorgang für die Speicherfeder 22 und 23 vermittels des Elektromotors 13 kann auch während eines Einbremsvorganges erfolgen. Hierzu ist, ausgehend von einer Lösestellung beispielsweise gemäß Fig.3, zum erneuten Einbremsen die Scheibenfederreibungskupplung 28 zu öffnen, wodurch, wie vorstehend bereits beschrieben, unter Rotation des zweiten Verschraubungsteiles 24 ein erneuter Einbremsvorgang erfolgt. Gleichzeitig hierzu wird der Elektromotor 13 erregt und treibt, wie ebenfalls vorstehend beschrieben, über das Getriebe 6,9 das erste Verschraubungsteil 16 in Verschraubungsrichtung nach rechts relativ zu den beiden anderen Verschraubungsteilen 24 und 30 an. Während des Einbremsvorganges wird also das dritte Verschraubungsteil 30 relativ zum Verschraubungsteil 16 aus diesem nach links herausgeschraubt, wodurch das Kraftabgabeglied 34 einen größeren Bremshub als das erste Verschraubungsteil 16 erfährt. Dieser Vorgang ist in Fig.4 dargestellt. Hierbei rotiert, wie bereits erwähnt, das zweite Verschraubungsteil 24 relativ rasch in Ausschraubrichtung nach rechts aus dem ersten Verschraubungsteil 16, das Verschraubungsteil 16 rotiert, angetrieben durch den Elektromotor 13 , wesentlich langsamer in Verschraubungsrichtung nach rechts und das dritte Verschraubungsteil 30 mitsamt dem Kraftabgabeglied 34 wird ohne Rotation relativ rasch nach links ausgeschoben. Bei Erreichen der Bremsstellung bleiben das Kraftabgabeglied 34 und damit auch das dritte Verschraubungsteil 30 in ihrer axialen Lage stehen, die Schraubenfederreibungskupplung 28 kann geschlossen werden und bei weiterhin anhaltendem Antrieb durch den Elektromotor 13 verschraubt sich das erste Verschraubungsteil 16 relativ auf den beiden anderen Verschraubungsteilen 24 und 30 unter Spannen der Speicherfedern 22 und 23 nach rechts. Während dieses Spannvorganges wird die vom Bremskrafterzeuger abgegebene Zuspannkraft entsprechend der Kompression der Speicherfedern 22 und 23 gesteigert, soll dies vermieden werden, so ist bei Erreichen des Bremszustandes des Elektromotor 13 abzuschalten. Anschließen kann, wie vorstehend beschrieben, durch zeitweiliges Öffnen der Schraubenfederreibungskupplung 36 wieder gelöst werden, sodann kann vermittels des Elektromotors 13 das erste Verschraubungsteil 16 wieder in seine rechte Endstellung gemäß Fig.1 verschraubt werden.

Es ist ersichtlich, daß, um die Verschraubung zwischen dem ersten und dem dritten Verschraubungsteil 16 bzw. 30 stets in Eingriff zu halten, bezogen auf den Vollösezustand nach Fig.1 die axiale Verschraubungslänge des ersten Verschraubungsteils 16 zum dritten Verschraubungsteil 30 in Zuspannkraftrichtung für das letztere zumindest dem Bremshub des Kraftabgabegliedes 34 entsprechen muß.

Es ist wesentlich, daß die Brems- und Lösevorgänge allein durch Schalten der als erste und zweite Bremse dienenden Schraubenfederreibungskupplungen 28 und 36 erfolgen können, ein Erregen und Betätigen des Elektromotors 13 ist hierzu nicht erforderlich; die Einbrems- und Lösevorgänge können somit sehr rasch, in ihrer Geschwindigkeit durch entsprechendes Betätigen der Schraubenfederreibungskupplungen 28 bzw. 36 erforderlichenfalls verzögert, erfolgen. Es ist zweckmäßig, die Schraubenfederreibungskupplungen 24 und 36 elektrisch zu betätigen, beispielsweise durch Magnete, welche das Schaltende 29 bzw. 37 oder die Schaltstange 38 entsprechend zu bewegen vermögen. Dabei ist es zur sicheren Bremsenbetätigung besonders vorteilhaft, wenn die Schraubenfederreibungskupplung 28 durch Ruhestrom geschlossen haltbar und die Schraubenfederreibungskupplung 36 durch Arbeitsstrom lösbar ist: Bei Stromausfall ergibt sich dann ein selbsttätiges Einbremsen, während ein Lösen ausgeschlossen ist. Zum gestuften bzw. nur teilweisen Betätigung der Reibungsbremsen können Meßsignale der Druckmeßdose 49 einer elektrischen Regeleinrichtung, insbesondere einem Elektronikgerät zugeführt werden, welches seinerseits die Betätigung der Schraubenfederreibungskupplungen 28 und 36 entsprechend einem Bremsanforderungsignal und anhand eines Soll- und Istwertvergleiches steuert.

Bei dieser Ansteuerungs-Ausbildung des Bremskrafterzeugers bedarf dieser keiner besonderen Notbrems- oder Löseeinrichtung, diese Funktionen können durch die Schraubenfederreibungskupplungen 28 und 36 mit übernommen werden; ggf. kann an der Schaltstange 38 eine Handbetätigung zum Einlösen der Schraubenfederreibungskupplung 36 bewirkenden Drehen vorgesehen werden.

Der Elektromotor 13 kann relativ schwach ausgebildet werden, das Getriebe 14 bzw. 6,9 muß dann lediglich eine entsprechend hohe Übersetzung aufweisen, da das Rückschrauben des ersten Verschraubungsteiles 16 aus einer nach links versetzten Lage in seine in Fig.1 dargestellte rechte Endlage nicht während der relativ kurzen Lösezeit der Bremse, sondern während längerer Zeitspannen im eingebremsten oder gelösten Zustand erfolgen kann. Der elektrische Anschlußwert des Elektromotors 13 kann entsprechend niedrig angesetzt werden, wodurch die Stromversorgung entlastet wird, und das Bauvolumen des Bremskrafterzeugers kann relativ klein gehalten werden. Zum Kleinhalten dieses Bauvolumens tragen auch insbesondere bei, daß die Verschraubungsbereiche des ersten Verschraubungsteils 16 zum zweiten und dritten Verschraubungsteil 24 bzw. 30 sich während der verschiedenen Funktionsvorgänge überschneiden, also mehrfach genutzt werden, und daß im Bereich des Federtellers 21 sowie des Ansatzes 20 und der Scheibenfederreibungkupplung 36 ein in radialer Richtung gestaffelter, in axialer Richtung sich überschneidender Aufbau möglich ist, wie es die Fig.1 deutlich zeigt: Im letzten Bremszyklus im eingebremsten Zustand kann sich die Speicherfeder 22 nahezu über die ganze Länge des Bremskrafterzeugers erstrecken.

Sollte in einem Notfall bei Ausfall des Elektromotors 13 nach einer entsprechenden Anzahl von Brems- und Lösezyklen ein Wiederspannen der Speicherfeder 22,23 erforderlich sein, so kann am Zahnradritzel 9, insbesondere an dessen im Deckel 2 gelagerten, der Einwegdrehkupplung 10 zugeordneten Wellenstummel 51, eine Schlüsselfläche vorgesehen sein, welche zum Ansetzten eines Drehwerkzeuges geeignet ist; vermittels dieses Drehwerkzeuges kann über das Getriebe 6,9 das erste Verschraubungsteil 16 in Richtung zum Deckel 2 unter Spannen der Speicherfedern 22 und 23 zurückgeschraubt werden. Bei diesem Schraubvorgang löst sich die Einwegdrehkupplung 11, so daß das Getriebe 14 und der Elektromotor 13 nicht mitgedreht werden müssen.

Zum Schutz gegen Verschmutzungen ist es zweckmäßig, einen Faltenbalg 52 vorzusehen, der sich vom Teil 47 des Kraftabgabegliedes 34 zum Deckel 3 erstreckt, und außerdem kann in nicht dargestellter Weise am Deckel 2 ein den Teller 25 übergreifender Schutzbalg vorgesehen werden.

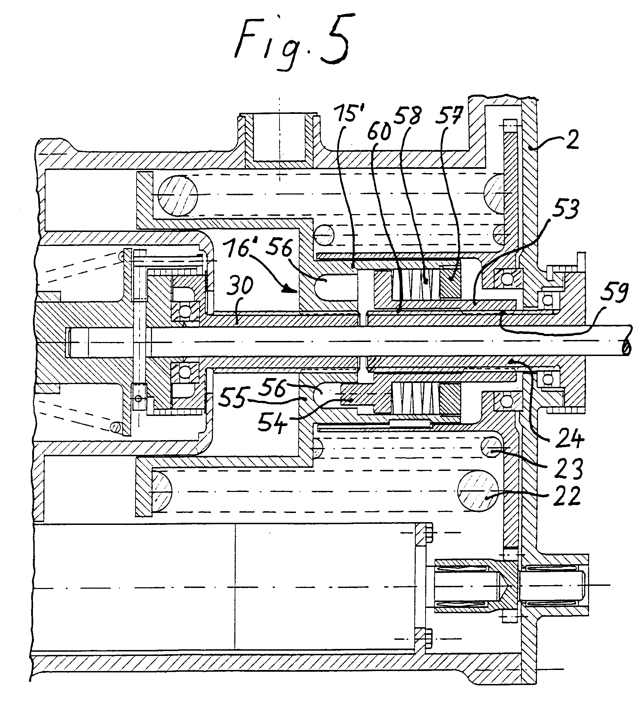

Die Fig.5 zeigt eine leicht abgewandelte Ausführungsform des Bremskrafterzeugers, wobei eine die Abstufbarkeit von Bremsungen verbessernde Elastizität in das erste Verschraubungsteil 16' integriert angeordnet ist; bei dieser Ausführungsform kann die vorstehend erwähnte, im Kraftabgabeglied 34 bzw. im an diesem angelenkten Bremsgestänge befindliche Elastizität entfallen. Gemäß Fig.5 ist der Hülsenabschnitt 15' des ersten Verschraubungsteiles 16' unmittelbar mit dem dritten Verschraubungsteil 30 verschraubt, während das zweite Verschraubungsteil 24 mit einem Mutterteil 53 verschraubt ist, welches im Hülsenabschnitt 15' relativ zu diesem undrehbar aber axial verschieblich gelagert ist. Zu dieser Lagerung weist das Mutterteil 53 an seinem dem Deckel 2 abgewandten Ende wenigstens einen exzentrisch angeordneten, achsparallel vorspringenden Zapfen 54 auf, welcher in eine von mehreren, an einer radialen Wandung 55 des ersten Verschraubungsteiles 16' vorgesehenen, entsprechend exzentrisch angeordneten und achsparallelen Sackbohrungen 56 verschieblich eingreift. Zwischen einem deckelseitig am Hülsenabschnitt 15 angeordneten Ringflansch 57 und dem Mutterteil 53 ist eine Feder 58 eingespannt, welche das Mutterteil 53 in Richtung der Belastung des ersten Verschraubungsteiles 16' durch die Speicherfedern 22,23 belastet. Die Feder 58 ist zweckmäßig als ein Stapel von Tellerfedern ausgebildet.

Im in Fig.5 dargestellten, der Fig.1 entsprechenden Vollösezustand des Bremskrafterzeugers hält das seinerseits durch das festgebremste, zweite Verschraubungsteil 24 axial fixierte Mutterteil 53 über die Feder 58 das erste Verschraubungsteil 16' in einer die Speicherfedern 22 und 23 gespannt und komprimiert haltenden Lage, die Vorspannkräfte der Feder 58 sowie der Speicherfedern 22 und 23 befinden sich also im Gleichgewicht. Zum Einbremsen wird das zweite Verschraubungsteil 24 derart freigegeben, daß sich daß Mutterteil 53 um einen der gewünschten Bremsstärke entsprechenden Hubweg axial nach links verschieben kann, wobei die Feder 58 teilweise entspannt wird. Die Speicherfedern 22 und 23 vermögen infolgedessen das erste Verschraubungsteil 16' mitsamt dem dritten Verschraubungsteil 30 und dem mit diesem gekoppelten Kraftabgabeglied 34 zum Zuspannen der Reibungsbremsen nach links zu verschieben, bis sich ein neuer Gleichgewichtszustand einstellt, bei welchem die teilentspannte Feder 58 nur noch einen Teil der von den Speicherfedern 22, 23 ausgeübten Kraft über das Mutterteil 53 und das zweite Verschraubungsteil 24 auf dem gehäusefesten Deckel 2 ableitet, während der restliche Kraftanteil der Speicherfedern 22,23 über das dritte Verschraubungsteil 30 als Zuspannkraft auf die Reibungsbremsen abgeleitet wird. Bei weiterem, axialen Linksverschrauben des Mutterteiles 53 wird die Feder 58 weiter entspannt, die Kraftaufteilung der von den Speicherfedern 22,23 auf das erste Verschraubungsteil 16' ausgeübten Kraft ändert sich entsprechend derart, daß über das dritte Verschraubungsteil 30 ein zunehmender Anteil als Zuspannkraft auf die Reibungsbremsen übertragen wird, während das Mutterteil 53 einen entsprechend abnehmenden Kraftanteil gegen den gehäusefesten Deckel 2 ableitet. Bei maximaler Bremsbetätigung ist das Mutterteil 53 derart weit nach links verschraubt, daß die Feder 58 völlig entspannt ist und somit keinerlei Kraftanteil mehr über das zweite Verschraubungsteil 24 auf den Deckel 2 ableitet, die volle Kraft der Speicherfedern 22 und 23 wird also über das dritte Verschraubungsteil 30 als Zuspannkraft auf die Reibungsbremsen übertragen. Das nachfolgende Lösen der Bremsen und Wiederspannen der Speicherfedern 22,23 erfolgt wie vorstehend zum Ausführungsbeispiel nach den Figuren 1 - 4 beschrieben.

Um die Baulänge des ersten Verschraubungsteils 16' wie beim zuvor beschriebenen Ausführungsbeispiel axial kurz zu halten ist es zweckmäßig, das Mutterteil 53 nur in seinem dem Deckel 2 benachbarten Bereich mit einem realtiv kurzen Gewindeabschnitt 59 zu versehen, in seinem restlichen, links anschließenden Abschnitt jedoch mit einer gewindefreien Bohrung 60 zu versehen. Beim Lösen der Reibungsbremsen kann hierdurch das dritte Verschraubungsteil 30 in die Bohrung 60 eintreten, so daß, wie zum Ausführungsbeispiel nach den Figuren 1 - 4 vorstehend bereits beschrieben, eine Mehrfachausnutzung des axial zur Verfügung stehenden Bauraumes erreicht wird und eine axial kurze Baulänge des Bremskrafterzeugers möglich ist.

Im übrigen entspricht der Bremskrafterzeuger nach Fig.5 dem vorangehend beschriebenen Ausführungsbeispiel.

### Kurzfassung:

Der Bremskrafterzeuger weist zum Erzeugen der Bremskraft eine Speicherfeder (22,23) auf, welche vermittels eines von einem Elektromotor (13) antreibbaren, nichtselbsthemmenden Schraubgetriebes spannbar ist. Das Schraubgetriebe umfaßt ein erstes Verschraubungsteil (16), welches vom Elektromotor (13) drehantreibbar und welches von der Speicherfeder (22,23) belastet ist. Das erste Verschraubungsteil (16) ist mit einem zweiten Verschraubungsteil (24) verschraubt, welches axial unverschieblich und vermittels einer schaltbaren, ersten Bremse (28) festbremsbar ist. Ein drittes, über ein gleichartiges Gewinde mit dem ersten Verschraubungsteil (16) verschraubtes Verschraubungsteil (30) ist drehbar, aber axial unverschieblich mit einem Kraftabgabeglied 34 gekoppelt, vermittels einer zweiten Bremse (36) festbremsbar und entgegen der Zuspannkraftrichtung gegen einen festen Anschlag (44) abfangbar. Durch Lösen der ersten Bremse (28) kann eingebremst, durch Lösen der zweiten Bremse (36) wieder gelöst und nachfolgend vermittels des Elektromotors (13) die Speicherfeder (22,23) wieder gespannt werden; das Wiederspannen der Speicherfeder (22,23) ist auch bereits während der Bremsvorgänge möglich.

Da zum Bremsen und Lösen lediglich eine Bremse (28 bzw. 36) geöffnet werden muß, können diese Vorgänge rasch und unabhängig vom Elektromotor (13) ablaufen, es sind somit keine besonderen Notbrems- oder Notlöseeinrichtungen erforderlich. Da insbesondere die Lösezeit nicht von der Leistung des Elektromotors (13) abhängt, kann der Elektromotor (13) leistungsschwach und klein ausgebildet werden und auch die Stromversorgung für den Elektromotor (13) ist dementsprechend leistungsschwach ausbildbar.

### Bezugszeichenliste

- 1: Gehäuse
- 2: Deckel
- 3: Deckel
- 4: Federtellerabschnitt
- 5: Drehantriebsteil
- 6: Zahnradkranz
- 7: Rohrabschnitt
- 8: Axialwälzlager
- 9: Zahnradritzel
- 6,9: Getriebe
- 10: Einwegdrehkupplung
- 11: Einwegdrehkupplung
- 12: Antriebswellenstummel
- 13: Elektromotor
- 14: Untersetzungsgetriebe
- 15,15': Hülsenabschnitt
- 16,16': 1. Verschraubungsteil
- 17: Drehkeil
- 18: Axialnut
- 19: Abschnitt
- 20: Ansatz
- 21: Federteller
- 22: Speicherfeder
- 23: Speicherfeder
- 24: 2. Verschraubungsteil
- 25: Teller
- 26: Axialwälzlager
- 27: Abschnitt
- 28: Schraubenfederreibungskupplung
- 29: Schaltende
- 30: 3. Verschraubungsteil
- 31: Teller
- 33: Teller
- 34: Kraftabgabeglied
- 35: Axialwälzlager
- 36: Schraubenfederreibungskupplung
- 37: Schaltende
- 38: Schaltstange
- 39: Längsschlitz
- 40: Achsrichtung
- 41: Querstift
- 42: Stift
- 43: Ringflansch
- 44: Anschlag
- 45: Feder
- 46: Teil
- 47: Teil
- 48: Anlenkauge
- 49: Druckmeßdose
- 50: Pfeil
- 51: Wellenstummel
- 52: Faltenbalg
- 53: Mutterteil
- 54: Zapfen
- 55: Wandung
- 56: Sackbohrung
- 57: Ringflansch
- 58: Feder
- 59: Gewindeabschnitt
- 60: Bohrung

## Patentansprüche

1. Elektromechanischer Bremskrafterzeuger für das Zuspannen von Fahrzeug-, insbesondere Schienenfahrzeug-Reibungsbremsen, mit einer Speicherfeder (22,23), die eine Zuspannkraft für die Reibungsbremsen an ein Kraftabgabeglied (34) abzugeben vermag, und mit einer Spanneinrichtung für die Speicherfeder (22,23), die ein nichtselbsthemmendes Schraubgetriebe mit einem von einem Elektromotor (13) ggf. über ein Getriebe (14;6,9) drehantreibbaren, ersten Verschraubungsteil (16;16') aufweist, dadurch gekennzeichnet, daß das erste Verschraubungsteil (16;16') axialverschieblich gelagert, von der Kraft der Speicherfeder (22,23) belastet und mit einem zweiten und einem dritten Verschraubungsteil (24 bzw. 30) verschraubt ist, wobei das zweite Verschraubungsteil (24) drehbar, jedoch über eine schaltbare, erste Bremse (28) festbremsbar und zumindest in Belastungsrichtung des ersten Verschraubungsteils (16,16') von der Kraft der Speicherfeder (22,23) axial unverschieblich gelagert und das dritte Verschraubungsteil (30) drehbar und zumindest in der genannten Belastungsrichtung axial unverschieblich mit dem Kraftabgabeglied (34) gekoppelt, vermittels einer schaltbaren, zweiten Bremse (36) drehfest haltbar und entgegen der genannten Belastungsrichtung axial an einem festen Anschlag (44) abfangbar ist.

2. Bremskrafterzeuger nach Anspruch 1, dadurch gekennzeichnet, daß das zweite und das dritte Verschraubungsteil (24;30) axial zueinander versetzt und mit gleichartigen Gewinden ggf. einem durchgehenden Gewinde des ersten Verschraubungsteils (16) verschraubt sind.

3. Bremskrafterzeuger nach Anspruch 1 oder 2, dadurch gekennzeichnet, daß, bezogen auf den Vollösezustand, die axialen Verschraubungshublängen des ersten Verschraubungsteils (16) in dessen Belastungsrichtung durch die Speicherfeder (22,23) relativ zum zweiten Verschraubungsteil (24) und entgegen der Belstungsrichtung relativ zum dritten Verschraubungsteil (30) etwa der Anzahl der ohne zwischenzeitliche Federspannvorgänge möglichen Brems- und Lösezyklen, multipliziert mit dem Bremshub des Kraftabgabegliedes (34), entspricht.

4. Bremskrafterzeuger nach den Ansprüchen 2 und 3, dadurch gekennzeichnet, daß im Vollösezustand zwischen dem zweiten und dem dritten Verschraubungsteil (24 bzw. 30) nur ein geringer, axialer Abstand vorhanden ist und daß die Verschraubungshublängen dieser Verschraubungsteile (24;30) einander überschneiden.

5. Bremskrafterzeuger nach Anspruch 3, dadurch gekennzeichnet, daß, bezogen auf den Vollösezustand, die axiale Verschraubungshublänge des ersten Verschraubungsteils (16) zum dritten Verschraubungsteil (30) in Zuspannkraftrichtung für das letztere zumindest dem Bremshub des Kraftabgabegliedes (34) entpsricht.

6. Bremskrafterzeuger nach Anspruch 1, dadurch gekennzeichnet, daß in dem Drehantrieb vom Elektromotor (13) zum ersten Verschraubungsteil (16) eine in Drehmomentbelastung zum Spannen der Speicherfeder (22,23) sperrende, erste Einwegdrehkuppplung (11) eingeordnet und an diesem Drehantrieb eine als Rücklaufsperre ausgebildete, zweite Einwegdrehkupplung (10) zu einem drehfesten Teil (Deckel 2) angeordnet sind.

7. Bremskrafterzeuger nach Anspruch 6, dadurch gekennzeichnet, daß beide Einwegdrehkupplungen (10;11) an einem Getrieberitzel (Zahnradritzel 9) angreifen.

8. Bremskrafterzeuger nach Anspruch 1, dadurch gekennzeichnet, daß in dem Drehantrieb dem ersten Verschraubungsteil (16) ein drehmomentübertragendes, Axialverschiebungen erlaubendes Antriebsteil (Drehkeil 17 und Axialnut 18) unmittelbar vorgeornet ist.

9. Bremskrafterzeuger nach Anspruch 8, dadurch gekennzeichnet, daß zwischen das erste Verschraubungsteil (16) und ein ihm zugeordnetes Drehantriebsteil (5) eine drehmomentübertragende und Axialverschiebungen zwischen beiden ermöglichende Axialverzahnung, in einer Axialnut (18) schiebegeführte Drehkeilanordnung (Drehkeil 17) oder dergl. eingeordnet ist.

10. Bremskrafterzeuger nach den Ansprüchen 8 und 9, dadurch gekennzeichnet, daß das erste Verschraubungsteil (16) einen mit einem Federteller (21) für die Speicherfeder (22,23) verbundenen, ein Innengewinde aufweisenden Hülsenabschnitt 15 aufweist, daß das zweite und das dritte Verschraubungsteil (24 bzw. 30) ein Außengewinde aufweisen und in den Hülsenabschnitt (15) eingeschraubt sind, daß das Drehantriebsteil (5) einen Federtellerabschnitt (4) und einen den Hülsenabschnitt (15) axial übergreifenden Rohrabschnitt (7) aufweist, daß die Axialverzahnung bzw. die Drehkeilanordnung (Drehkeil 17) zwischen dem Innenumfang des Rohrabschnittes (7) und dem Außenmantel des Hülsenabschnittes (15) eingeordnet ist, daß die Speicherfeder (22,23) zwischen dem Federteller (21) und dem Federtellerabschnitt (4) eingespannt ist und daß der Federtellerabschnitt (4) in seiner Belastungsrichtung durch die Speicherfeder (22,23) axial und drehbar gegen ein festes Teil ( Deckel 2) abgestützt ist.

11. Bremskrafterzeuger nach Anspruch 1, dadurch gekennzeichnet, daß die zweite Bremse (Schraubenfederreibungsbremse 36) zwischen dem dritten Verschraubungsteil (30 und dem drehfest gehalterten Kraftabgabeglied (34) fernbetätigbar eingeordnet ist.

12. Bremskrafterzeuger nach Anspruch 1, dadurch gekennzeichnet, daß die erste und die zweite Bremse jeweils als unter der aus der Speicherfederbelastung des ersten Verschraubungsteils (16) resultierenden Drehmomentsbelastung sperrende, schaltbare Einwegdrehkupplungen (Schraubenfederreibungskupplungen 28 bzw. 36) ausgebildet sind.

13. Bremskrafterzeuger nach Anspruch 12, dadurch gekennzeichnet, daß die Einwegdrehkupplungen als Schraubenfederreibungskupplungen (28;36) ausgebildet sind.

14. Bremskrafterzeuger den Ansprüchen 4 und 10, dadurch gekennzeichnet, daß das zweite und das dritte Verschraubungsteil (24 und 30) von einer zu diesen koaxialen und relativbeweglichen Schaltstange (38) für die Fernbetätigung der zweiten Bremse (Schraubenfederreibungskupplung 36) durchgriffen sind.

15. Bremskrafterzeuger nach den Ansprüchen 13 und 14, dadurch gekennzeichnet, daß die Schaltstange (38) um ihre Achsrichtung und verdrehbar, aber axialverschieblich mit einem im Kraftabgabeglied (34) um dessen Achsrichtung begrenzt drehbar gelagerten und es radial durchragenden Querstift (41) gekoppelt ist, dessen radialäußeres Ende mit dem Schaltende (37) einer der zweiten Bremse (Schraubenfederreibungskupplung 36) zugeordneten Schraubenfeder gekoppelt ist.

16. Bremskrafterzeuger nach Anspruch 10, dadurch gekennzeichnet, daß zwischen das dritte Verschraubungsteil (30) und das Kraftabgabeglied (34), zwischen den Federtellerabschnitt (4) und das diesen axial abstützende, feste Teil (Deckel 2) und zwischen das zweite Verschraubungsteil (24) und ein festes Teil (Deckel 2) je ein Axialwälzlager (35,8,26) eingeordnet ist.

17. Bremskrafterzeuger nach den vorstehenden Ansprüchen 1 bis 16, dadurch gekennzeichnet, daß das Kraftabgabeglied (34) gegen eine vorgespannte Federkraft axial verkürzbar ausgebildet ist.

18. Bremskrafterzeuger nach den Ansprüchen 1 bis 16, dadurch gekennzeichnet, daß der Hülsenabschnitt (15') unmittelbar mit dem dritten Verschraubungsteil (30) verschraubt ist und ein zu ihm undrehbar, aber axialverschieblich gelagertes Mutterteil (53) beinhaltet, das mit dem zweiten Verchraubungsteil (24) verschraubt ist, wobei zwischen das Mutterteil (53) und den Hülsenabschnitt (15') eine ersteres in Belastungsrichtung des ersten Verschraubungsteils (16') von der Speicherfeder (22,23) belastende Feder (58) eingespannt ist.

19. Bremskrafterzeuger nach einem oder mehreren der vorstehenden Ansprüche, dadurch gekennzeichnet, daß in das Kraftabgabeglied (34) eine dessen axiale Belastung messende Kraftmeßeinrichtung (Druckmeßdose 49) eingeordnet ist.

20. Bremskrafterzeuger nach einem oder mehreren der vorstehenden Ansprüche, dadurch gekennzeichnet, daß das Kraftabgabeglied (34) entgegen der abgebbaren Zuspannkraft von einer Feder (45) belastet ist.

21. Bremskrafterzeuger nach einem oder mehreren der vorstehenden Ansprüche, dadurch gekennzeichnet, daß die erste und die zweite Bremse (Schraubenfederreibungskupplung 28 bzw. 36) elektrisch betätigbar sind, wobei die erste Bremse (Schraubenfederreibungskupplung 28) durch Ruhestrom geschlossen haltbar und die zweite Bremse (Schraubenfederreibungskupplung 36) durch Arbeitsstrom lösbar ist.

## Claims

1. Electromechanical brake-force generator for the application of vehicle friction brakes, in particular rail-vehicle friction brakes, having a preloaded spring (22,23) which can deliver an application force for the friction brakes to a force-delivery element (34), and having a tensioning device for the preloaded spring (22,23) which has a helical gear which is not self-locking and which has a first screw part (16;16') which can be driven in a rotary manner by an electromotor (13) if necessary by way of a gearing (14;6,9), characterized in that the first screw part (16;16') is mounted in an axially displaceable manner, is loaded by the force of the preloaded spring (22,23) and is in screw engagement with a second and a third screw part (24 and 30), the second screw part (24) being mounted in a rotatable manner, but in such a way that it can be securely braked by way of an operable first brake (28), and it is mounted in such a way that it cannot be axially displaced by the force of the preloaded spring (22,23) at least in the loading direction of the first screw part (16,16'), and the third screw part (30) is rotatably coupled, and at least in the loading direction mentioned in an axially fixed manner, with the force-delivery element (34), can be held so as to be secure against rotation by means of an operable second brake (36) and can be axially caught at a fixed stop (44) against the loading direction mentioned.

2. Brake-force generator according to claim 1, characterized in that the second and the third screw part (24;30) are axially offset with respect to each other and are screwed with similar threads, possibly a continuous thread of the first screw part (16).

3. Brake-force generator according to claim 1 or 2, characterized in that in relation to the complete release state the axial screw stroke lengths of the first screw part (16) in its loading direction by way of the preloaded spring (22,23) relative to the second screw part (24) and against the loading direction relative to the third screw part (30) corresponds approximately to the number of brake and release cycles which are possible without intervening spring-tensioning procedures, multiplied by the brake lift of the force-delivery element (34).

4. Brake-force generator according to claims 2 and 3, characterized in that in the complete release state there is only a small axial spacing between the second and the third screw part (24 and 30) and in that the screw stroke lengths of these screw parts (24;30) overlap.

5. Brake-force generator according to claim 3, characterized in that in relation to the complete release state the axial screw stroke length of the first screw part (16) to the third screw part (30) in the direction of application force for the latter part corresponds at least to the brake lift of the force-delivery element (34).

6. Brake-force generator according to claim 1, characterized in that in the rotary drive from the electromotor (13) to the first screw part (16) there is arranged a first one-way rotary coupling (11) blocking in torque load in the direction of tensioning the preloaded spring (22,23) and at this rotary drive a second one-way rotary coupling (10) to a rotationally secure part (cover 2) is arranged, formed as a return stop.

7. Brake-force generator according to claim 6, characterized in that both one-way rotary couplings (10;11) engage in a gear pinion (gearwheel pinion 9).

8. Brake-force generator according to claim 1, characterized in that in the rotary drive a torque-transmitting drive part (rotating wedge 17 and axial groove 18) allowing axial displacements is arranged directly in front of the first screw part (16).

9. Brake-force generator according to claim 8, characterized in that between the first screw part (16) and a rotary drive part (5) associated therewith a torque-transmitting axial gearing which enables axial displacements between the two is arranged in a rotating-wedge arrangement (rotating wedge 17) or suchlike slide-guided to an axial groove (18).

10. Brake-force generator according to claims 8 and 9, characterized in that the first screw part (16) has a sleeve section 15 connected to a spring plate (21) for the preloaded spring (22,23) and having an internal thread, in that the second and the third screw parts (24 and 30) have an external thread and are screwed into the sleeve section (15), in that the rotary drive part (5) has a spring-plate section (4) and a tubular section (7) engaging axially over the sleeve section (15), in that the axial gearing or rotating-wedge arrangement (rotating wedge 17) is arranged between the inner circumference of the tubular section (7) and the outer wall of the sleeve section (15), in that the preloaded spring (22,23) is clamped between the spring plate (21) and the spring-plate section (4) and in that the spring-plate section (4) is supported in its loading direction by the preloaded spring (22,23) axially and rotatably against a fixed part (cover 2).

11. Brake-force generator according to claim 1, characterized in that the second brake (helical-spring friction brake 36) is arranged between the third screw part (30) and the force-delivery element (34), which is arranged in a rotationally secure manner, in such a way that it can be remote-controlled.

12. Brake-force generator according to claim 1, characterized in that the first and the second brake are each constructed as operable one-way rotary couplings (helical-spring friction couplings 28 and 36) which block under the torque load resulting from the preloaded-spring load of the first screw part (16).

13. Brake-force generator according to claim 12, characterized in that the one-way rotary couplings are constructed as helical-spring friction couplings (28;36).

14. Brake-force generator according to claims 4 and 10, characterized in that through the second and the third screw part (24 and 30) there engages a switching bar (38), coaxial thereto and moveable relative to it, for the remote control of the second brake (helical-spring friction coupling 36).

15. Brake-force generator according to claims 13 and 14, characterized in that the switching bar (38) is coupled about its axial direction and in a rotatable manner, but in an axially displaceable manner, to a transverse pin (41) which is rotatably mounted to a limited extent in the force-delivery element (34) about its axial direction and projects through it radially, the radially outer end of which transverse pin is coupled to the switching end (37) of a helical spring associated with the second brake (helical-spring friction coupling 36).

16. Brake-force generator according to claim 10, characterized in that an axial rolling bearing (35,8,26) is in each case arranged between the third screw part (30) and the force-delivery element (34), between the spring-plate section (4) and the fixed part (cover 2) supporting it axially and between the second screw part (24) and a fixed part (cover 2).

17. Brake-force generator according to the above claims 1 to 16, characterized in that the force-delivery element (34) is constructed so that it can be shortened axially against a preloaded spring force.

18. Brake-force generator according to claims 1 to 16, characterized in that the sleeve section (15') is in direct screw engagement with the third screw part (30) and contains a nut part (53) which is mounted so that it cannot be rotated in relation to the third screw part but can be axially displaced, which nut part is in screw engagement with the second screw part (24), a first spring (58) being clamped between the nut part (53) and the sleeve section (15'), which spring is loaded by the preloaded spring (22,23) in the loading direction of the first screw part (16').

19. Brake-force generator according to one or more of the above claims, characterized in that in the force-delivery element (34) there is arranged a force-measuring device (pressure-measuring cell 49) which measures its axial load.

20. Brake-force generator according to one or more of the above claims, characterized in that the force-delivery element (34) is loaded by a spring (45) against the application force which can be delivered.

21. Brake-force generator according to one or more of the above claims, characterized in that the first and the second brake (helical-spring friction couplings 28 and 36 respectively) can be operated electrically, wherein the first brake (helical-spring friction coupling 28) can be kept closed by way of quiescent current and the second brake (helical-spring friction coupling 36) can be released by way of operating current.

## Revendications

1. Générateur électromécanique de force de freinage pour le serrage de freins à friction de véhicules, notamment de véhicules sur rails, comportant un ressort accumulateur (22,23), qui peut appliquer une force de serrage pour les freins à friction à un organe d'application de force (34), et un dispositif de bandage pour le ressort accumulateur (22,23), qui possède un engrenage hélicoïdal non autobloquant comportant une première partie de vissage (16; 16') qui peut être entraînée en rotation par un moteur électrique (13), éventuellement par l'intermédiaire d'une transmission (14; 6,9), caractérisé en ce que la première partie de vissage (16;16') est montée de manière à être déplaçable axialement, est chargée par la force du ressort accumulateur (22,23) et est vissée à des seconde et troisième parties de vissage (24 et 30), la seconde partie de vissage (24) étant montée de manière à pouvoir tourner, mais de manière à pouvoir être freinée par l'intermédiaire d'un premier frein commutable (28) et sans possibilité de déplacement axial au moins dans la direction de charge de la première partie de vissage (16,16') par la force du ressort accumulateur (22,23), et la troisième partie de vissage (30) étant accouplée à l'organe d'application de force (34), de manière à pouvoir tourner et en étant bloquée axialement au moins dans ladite direction de charge, et pouvant être retenue avec blocage en rotation au moyen d'un second frein commutable (36) et pouvant s'appliquer axialement contre une butée fixe (44) en sens opposé de ladite direction de charge.

2. Générateur de force de freinage selon la revendication 1, caractérisé en ce que les seconde et troisième parties de vissage (24; 30) sont décalées axialement l'une par rapport à l'autre et sont vissées au moyen de filetages de même type, et éventuellement sur un filetage continu de la première partie de vissage (16).

3. Générateur de force de freinage selon la revendication 1 ou 2, caractérisé en ce que, par rapport à l'état de desserrage complet, les longueurs axiales de course de vissage de la première partie de vissage (16) dans la direction de charge de cette partie par le ressort accumulateur (22,23) par rapport à la seconde partie de serrage (24) et en sens opposé de la direction de charge par rapport à la troisième partie de vissage (30) correspond approximativement au nombre des cycles de freinage et de desserrage, qui sont possibles sans aucune opération intermédiaire de bandage du ressort, multiplié par la course de freinage de l'organe d'application de force (34).

4. Générateur de force de freinage selon les revendications 2 et 3, caractérisé en ce qu'à l'état entièrement desserré, seule une faible distance axiale est présente entre les seconde et troisième parties de vissage (24 et 30), et que les longueurs de course de vissage de ces parties de vissage (24; 30) se recoupent.

5. Générateur de force de freinage selon la revendication 3, caractérisé en ce que, par rapport à l'état entièrement desserré, la longueur axiale de course de vissage de la première partie de vissage (16) jusqu'à la troisième partie de vissage (30) dans la direction de la force de serrage pour cette dernière partie de vissage correspond au moins à la course de freinage de l'organe d'application de force (34).

6. Générateur de force de freinage selon la revendication 1, caractérisé en ce qu'un premier accouplement d'entraînement unidirectionnel en rotation (11), qui réalise un blocage dans l'application du couple pour le bandage du ressort accumulateur (22,23), est disposé dans le système d'entraînement en rotation allant du moteur électrique (13) à la première partie de vissage (16), et que sur ce système d'entraînement en rotation est disposé un second accouplement d'entraînement unidirectionnel en rotation (10), agencé en tant que système de blocage antiretour et établissant la liaison avec une partie bloquée en rotation (couvercle 2).

7. Générateur de force de freinage selon la revendication 6, caractérisé en ce que les deux accouplements d'entraînement unidirectionnel en rotation (10;11) attaquent un pignon de transmission pignon (9).

8. Générateur de force de freinage selon la revendication 1, caractérisé en ce que dans le système d'entraînement en rotation, une partie d'entraînement (clavette d'entraînement en rotation 17 et rainure axiale 18), qui transmet le couple et permet des déplacements axiaux, est disposée directement en amont de la première partie de vissage (16).

9. Générateur de force de freinage selon la revendication 8, caractérisé en ce qu'entre la première partie de vissage (16) et une partie d'entraînement en rotation (5), qui lui est associée, est disposé un dispositif à clavette d'entraînement en rotation (clavette d'entraînement en rotation 17) ou analogue, qui comporte une denture axiale transmettant le couple et permettant des déplacements axiaux entre les deux parties et est guidée en translation dans une rainure axiale (18).

10. Générateur de force de freinage selon la revendication 8 et 9, caractérisé en ce que la première partie de vissage (16) comporte une section de douille (15) qui est reliée à une coupelle (21) pour le ressort accumulateur (22, 23) et possède un taraudage, que les seconde et troisième parties de vissage (24 et 30) possèdent un filetage extérieur et sont vissées dans la section de douille (15), que la partie d'entraînement en rotation (5) possède une section (4) de coupelle pour ressort et une section tubulaire (7) qui s'engage axialement par-dessus la section de douille (15), que la denture axiale ou le dispositif à clavette d'entraînement en rotation (clavette d'entraînement en rotation 17) est disposé entre la périphérie intérieure de la section tubulaire (7) et l'enveloppe extérieure de la section de douille (15), que le ressort accumulateur (22,23) est bandé entre la coupelle (21) pour le ressort et la section de coupelle pour ressort (4), et que la section de coupelle pour ressort (4) est supportée par le ressort accumulateur (22,23), axialement dans sa direction de charge et de manière à pouvoir tourner, contre une partie fixe (couvercle 2).

11. Générateur de force de freinage selon la revendication 1, caractérisé en ce que le second frein (frein à friction à ressort hélicoïdal 36) est disposé, de manière à pouvoir être actionné à distance, entre la troisième partie de vissage (30) et l'organe d'application de force (34) retenu bloqué en rotation.

12. Générateur de force de freinage selon la revendication 1, caractérisé en ce que les premier et second freins sont réalisés respectivement sous la forme d'accouplements d'entraînement unidirectionnel en rotation commutables (accouplements à friction à ressorts hélicoïdaux 28 et 36), qui exécutent un blocage sous la charge de couple résultant de la charge de la première partie de vissage (16) par le ressort accumulateur.

13. Générateur de force de freinage selon la revendication 12, caractérisé en ce que les accouplements d'entraînement unidirectionnel en rotation sont agencés sous la forme d'accouplements à friction à ressorts hélicoïdaux (28; 36).

14. Générateur de force de freinage selon la revendication 4 et 10, caractérisé en ce que les seconde et troisième parties de vissage (24 et 30) sont traversées par une barre de commutation (38) qui est coaxiale à ces parties et déplaçable par rapport à ces dernières, pour l'actionnement à distance du second frein (accouplement à friction à ressort hélicoïdal 36).

15. Générateur de force de freinage selon la revendication 13 et 14, caractérisé en ce que la barre de commutation (38) est accouplée de manière à pouvoir tourner autour de sa direction d'axe, mais en étant déplaçable axialement, à une goupille transversale (41) qui est montée de manière à pouvoir tourner de façon limitée dans l'organe d'application de force (34) autour de la direction d'axe de cet organe, et traversant radialement cet organe et dont l'extrémité radiale extérieure est accouplée à l'extrémité de commutation (37) d'un ressort hélicoïdal associé au second frein (accouplement à friction à ressort hélicoïdal 36).

16. Générateur de force de freinage selon la revendication 10, caractérisé en ce que des roulements axiaux respectifs (35,8,26) sont disposés entre la troisième partie de vissage (30) et l'organe d'application de force (34), entre la section (4) formant coupelle pour ressort et la partie fixe (couvercle 2), qui supporte axialement cette section, et entre la seconde partie de vissage (24) et une partie fixe (couvercle 2).

17. Générateur de force de freinage selon les revendications précédentes 1 à 16, caractérisé en ce que l'organe d'application de force (34) est agencé de manière à pouvoir être raccourci axialement à l'encontre d'une force d'un ressort précontraint.

18. Générateur de force de freinage selon les revendications 1 à 16, caractérisé en ce que la section de douille (15') est vissée directement à la troisième partie de vissage (30) et contient une partie formant écrou (53), qui est bloquée en rotation sur elle mais est déplaçable axialement et qui est vissée sur la seconde partie de vissage (24), et entre la partie formant écrou (53) et la section de douille (15') est serré un ressort (58), chargeant la partie formant écrou dans la direction de chargement de la première partie de vissage (16') par le ressort accumulateur (22,23).

19. Générateur de force de freinage selon une ou plusieurs des revendications précédentes, caractérisé en ce qu'un dispositif dynamométrique (boîte dynamométrique 49), qui mesure la charge axiale appliquée par l'organe d'application de force (34), est monté dans cet organe.

20. Générateur de force de freinage selon une ou plusieurs des revendications précédentes, caractérisé en ce que l'organe d'application de force (34) est chargé par un ressort (45) en sens opposé de la force de serrage pouvant être délivrée.

21. Générateur de force de freinage selon une ou plusieurs des revendications précédentes, caractérisé en ce que les premier et second freins (accouplement à friction à ressort hélicoïdal 28 ou 36) peuvent être actionnés électriquement, le premier frein (accouplement à friction à ressort hélicoïdal 28) pouvant être maintenu fermé par un courant de repos et le second frein (accouplement à friction à ressort hélicoïdal 36) pouvant être desserré par un courant de travail.
